# EUROPÄISCHE PATENTSCHRIFT

(11) **EP 1 536 714 B1**
(45) Veröffentlichungstag und Bekanntmachung des Hinweises auf die Patenterteilung: **02.11.2006**
(21) Anmeldenummer: 03735433.9
(22) Anmeldetag: 22.05.2003
(51) Int. Cl.: A45D 20/06

(54) **STROMNETZUNABHÄNGIGE VORRICHTUNG ZUM ERZEUGEN EINES WARMLUFTSTROMS**
POWER SUPPLY INDEPENDENT DEVICE FOR PRODUCING A HOT AIR FLOW
DISPOSITIF INDEPENDANT DU SECTEUR ELECTRIQUE, SERVANT A PRODUIRE UN COURANT D'AIR CHAUD

(30) Priorität: 11.09.2002 DE 10242155
(43) Veröffentlichungstag der Anmeldung: 08.06.2005
(73) Patentinhaber: Wella Aktiengesellschaft, 64274 Darmstadt (DE)
(72) Erfinder: ANTHES, Peter, 64711 Erbach (DE); LIEBECK, Martin, 64293 Darmstadt (DE)
(86) Internationale Anmeldenummer: PCT/EP2003/005348
(87) Internationale Veröffentlichungsnummer: WO 2004/032668

(56) Entgegenhaltungen:
- DE-A- 19 809 297
- GB-A- 2 170 705
- US-A- 3 150 657
- US-A- 4 903 416

## Beschreibung

Die Erfindung betrifft eine Warmluftdusche nach der Gattung des Oberbegriffs des Anspruchs 1.

Eine derartige Warmluftdusche ist beispielsweise aus der GB2170705A bekannt, die eine Warmluftdusche zum Trocknen von Kopfhaar beschreibt. Die Warmluft wird von einem katalytischen Heizelement erzeugt, welches von einem flüssigen Brennstoff versorgt wird, wobei die Strömung der Warmluft von einem elektrischen Gebläse erzeugt wird, das von einer Batterie oder einem wieder aufladbaren Akkumulator versorgt wird. Nachteilig hierbei ist, dass zum Betrieb der Warmluftdusche nebst einem Nachfüllen von flüssigen Brennstoff auch die Batterie von Zeit zu Zeit gegen eine neue auszutauschen oder der Akkumulator immer wieder extern über ein Steckernetzteil aufzuladen ist, was in der Praxis eine umständliche Handhabung bedeutet. Zum Betrieb der Warmluftdusche muß nicht nur der Brennstoffspeicher ausreichend gefüllt sein, sondern auch die Batterie oder der Akkumulator ausreichend geladen sein.

Der Erfindung liegt die Aufgabe zu Grunde, eine gattungsgleiche Warmluftdusche zu schaffen, die zum Betrieb der Warmluftdusche ein Austauschen der Batterie oder ein Wiederaufladen eines Akkumulators überflüssig macht und damit eine bessere Handhabung der Vorrichtung erzielt.

Diese Aufgabe wird durch die kennzeichnenden Merkmale des Anspruchs 1 gelöst. Weitere vorteilhafte Weiterbildungen der Erfindung gehen aus den Unteransprüchen hervor.

Die Erfindung wird an Hand eines Ausführungsbeispiels näher erläutert.

Es zeigt:
- Fig. 1: in einer schematischen Seitenansicht eine Warmluftdusche, und
- Fig. 2: ein Blockschaltbild zur Funktion der Warmluftdusche.

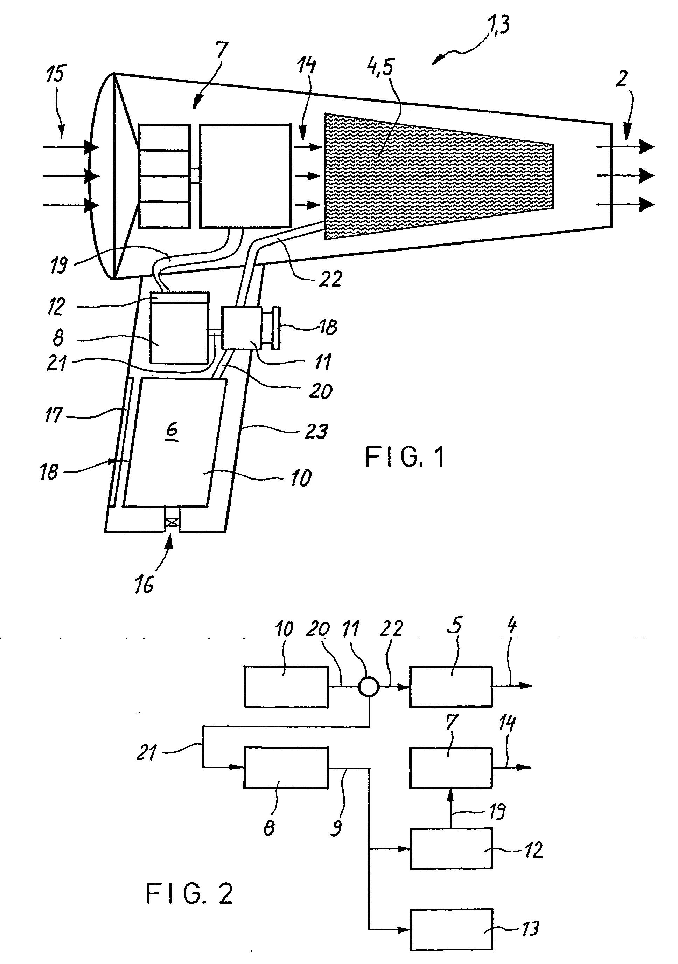

In der Fig. 1 ist eine stromnetzunabhängige Warmluftdusche 3 zum Erzeugen eines Warmluftstroms 2 zum Trocknen von Kopfhaar dargestellt, wobei eine Wärme 4 von einem katalytischen Heizelement 5 erzeugt wird, das von einem Gas eines flüssigen Brennstoff 6 versorgt wird. Ein Luftstrom 14 der Warmluft 2 wird von einem elektrischen Gebläse 7 erzeugt, der Außenluft 15 ansaugt. Die Warmluftdusche 3 ist mit einer Brennstoffzelle 8 versehen, die das Gebläse 7 über eine Leitung 19 mit elektrischer Energie 9 versorgt. Es ist ein Brennstoffspeicher 10 für den flüssigen Brennstoff 6 vorgesehen, der über eine Leitung 20, ein Ventil 11 und einer Leitung 21 mit der Brennstoffzelle 8 und der über das Ventil 11 über eine Leitung 22 mit dem katalytischen Heizelement 5 verbunden ist zwecks gemeinsamer Versorgung mit dem Brennstoff 6 aus dem Brennstoffspeicher 10. Daher ist für den laufenden Betrieb der Vorrichtung 1 nur ein Betriebsstoff erforderlich. Durch Drücken auf ein Betätigungsorgan 18 öffnet sich das Ventil 11, wodurch die Brennstoffzelle 8 sofort elektrische Energie 9 an das Gebläse 7 liefert und das katalytische Heizelement 5 mit Brennstoff 6 versorgt wird. Dadurch wirkt das Ventil 11 wie ein elektrischer Ein-/Ausschalter. Neben dem Gebläse 7 versorgt die Brennstoffzelle 8 auch eine Steuerelektronik 12, wahlweise auch andere elektrische Komponenten 13 der Vorrichtung 1 mit elektrischer Energie 9. Ein Einfüllventil 16 dient zum Nachfüllen von flüssigem Brennstoff 6 in den Brennstoffspeicher 10. Zur Füllstandskontrolle des flüssigen Brennstoffs 6 ist ein Sichtfenster 17 vorgesehen, wobei der Brennstoffspeicher 10 zumindest in dem Bereich des Sichtfensters 17 aus transparentem Material 18 besteht. Ein Griff 23 dient zum Halten der Warmluftdusche 3 und zur Aufnahme des Brennstoffspeichers 10, der Brennstoffzelle 8 und des Ventils 11.

Technisch ausgereift ist derzeit die PEMFC-Brennstoffzelle (Polymer Elektrolyte Membrane Fuel Cell), die mit einer festen dünnen gasdichten protonenleitenden Kunststoffmembran als Elektrolyt betrieben wird. Als Brennstoff 6 dient Wasserstoff. Die derzeit verfügbare Leistung liegt bei Leistungsdichten von ca. 1 W/cm2. Das Leistungsgewicht beträgt ca. 2 kg/kW.

Da reiner Wasserstoff jedoch nur durch aufwendige Reformierung hergestellt werden kann, wird weltweit an der Verwendung anderer Anodengase gearbeitet. Aussichtsreiche Kandidaten sind u. a. die SOFC-Brennstoffzelle 8 (Solid Oxide Fuel Cell). Sie ermöglicht eine direkte Verwendung von Methan als Anodengas. Einen weiteren Ansatz stellt die DMFC-Brennstoffzelle 8 (Direct Methanol Fuel Cell) dar, welche ohne Reformation direkt mit Methanol als Brennstoff 6 betrieben werden kann. Die beiden letzgenannten Brennstoffzellen 8 sind jedoch derzeit für eine Verwendung in einem portablen friseurtechnischen Gerät noch ungeeignet.

Der Brennstoffspeicher 9 wird bei einer PEMFC mit flüssigem Wasserstoff, bei einer SOFC mit flüssigem Methan und bei einer DMFC mit flüssigem Methanol gefüllt.

Auch wenn die PEMFC-Brennstoffzelle derzeit die einzig sofort umsetzbare Möglichkeit darstellt, ist dieser Typ von Brennstoffzelle nicht auf die Erfindung eingeschränkt. Auch wird es in Zukunft mit Sicherheit heute noch unbekannte und verbesserte Zellenformen geben.

Die Fig. 2 zeigt ein Blockschaltbild zur Funktion der Warmluftdusche (Fön) nach der Fig. 1. Über das von Hand schaltbare Ventil 11 wird aus dem nachfüllbaren Brennstoffspeicher 10, der beispielsweise als ein Metallhydridspeicher ausgebildet sein kann, der gasförmige Brennstoff 6 gleichzeitig zum katalytischen Heizelement 5 und zur Brennstoffzelle 8 zugeführt. Dadurch entsteht im Heizelement 5 Wärme 4 und in der Brennstoffzelle 8 elektrische Energie 9 zum Betreiben des elektrischen Gebläses 7, der Steuerelektronik 12 für das Gebläse 7 und anderer elektrischen Komponenten 13 der Warmluftdusche 3. Der Luftstrom 14 des Gebläses 7 wird durch das Heizelement 5 geleitet, woduch die Wärme 4 in einen Warmluftstrom 2 (Fig. 1) überführt wird.

### Bezugsziffernliste:

- 2: Warmluftstrom
- 3: Warmluftdusche
- 4: Wärme
- 5: Katalytisches Heizelement
- 6: Flüssiger Brennstoff
- 7: Elektrisches Gebläse
- 8: Brennstoffzelle
- 9: Elektrische Energie
- 10: Brennstoffspeicher
- 11: Ventil
- 12: Steuerelektronik
- 13: Elektrische Komponente
- 14: Luftstrom
- 15: Außenluft
- 16: Einfüllventil
- 17: Sichtfenster
- 18: Betätigungsorgan
- 19: Leitung
- 20: Leitung
- 21: Leitung
- 22: Leitung
- 23: Griff

## Patentansprüche

1. Stromnetzunabhängige Warmluftdusche (3) zum Erzeugen eines Warmluftstroms (2), wobei die Wärme (4) von einem katalytischen Heizelement (5) erzeugt wird, welches mit einem flüssigen Brennstoff (6) aus einem Brennstoffspeicher (10) versorgt wird, und dass der Warmluftstrom (2) von einem elektrischen Gebläse (7) erzeugt wird, **dadurch gekennzeichnet, dass** die Warmluftdusche (3) mit einer Brennstoffzelle (8) versehen ist, die das Gebläse (7) mit elektrischer Energie (9) versorgt, wobei der Speicher (10) über ein Ventil (11) mit der Brennstoffzelle (8) und dem Heizelement (5) verbunden ist zwecks gemeinsamer Versorgung mit dem flüssigen Brennstoff (6).

2. Warmluftdusche nach Anspruch 1, **dadurch gekennzeichnet, dass** die Brennstoffzelle (8) nebst dem Gebläse (7) auch eine Steuerelektronik (12), wahlweise auch andere elektrische Komponenten (13) mit elektrischer Energie (9) versorgt.

3. Warmluftdusche nach Anspruch 1, **dadurch gekennzeichnet, dass** die Warmluftdusche (3) mit einem Sichtfenster (17) versehen ist, wobei der Brennstoffspeicher (10) zumindest im Bereich des Sichtfensters (17) aus transparentem Material (18) besteht.

## Claims

1. Mains-independent hot-air blower (3) for production of a hot-air flow (2), with the heat (4) being produced by a catalytic heating element (5) which is supplied with a liquid fuel (6) from a fuel reservoir (10), and in that the hot-air flow (2) is produced by an electrical fan (7), **characterized in that** the hot-air blower (3) is provided with a fuel cell (8), which supplies electrical power (9) to the fan (7), with the reservoir (10) being connected via a valve (11) to the fuel cell (8) and to the heating element (5), in order to supply the liquid fuel (6) to them jointly.

2. Hot-air blower according to Claim 1, **characterized in that** the fuel cell (8) supplies electrical power (9) not only to the fan (7) but also to control electronics (12), and optionally also to other electrical components (13).

3. Hot-air blower according to Claim 1, **characterized in that** the hot-air blower (3) is provided with a viewing window (17), with the fuel reservoir (10) being composed of transparent material (18), at least in the area of the viewing window (17).

## Revendications

1. Douche d'air chaud (3) indépendante du secteur électrique, servant à produire un courant d'air chaud (2), la chaleur (4) étant produite par un élément de chauffage catalytique (5), qui est alimenté en combustible liquide (6) à partir d'un réservoir de combustible (10), tandis que le courant d'air chaud (2) est produit par un ventilateur électrique (7), **caractérisée en ce que** la douche d'air chaud (3) est équipée d'une pile à combustible (8), qui alimente le ventilateur (7) en énergie électrique (9), le réservoir (10) étant relié à la pile à combustible (8) et à l'élément de chauffage (5) par une vanne (11), en vue d'une alimentation commune en combustible liquide (6).

2. Douche d'air chaud selon la revendication 1, **caractérisée en ce qu'**en dehors du ventilateur (7), la pile à combustible (8) peut également alimenter une électronique de commande (12) ainsi que d'autres composants électriques (13) au choix en énergie électrique (9).

3. Douche d'air chaud selon la revendication 1, **caractérisée en ce que** la douche d'air chaud (3) est équipée d'une fenêtre de contrôle (17), le réservoir de combustible (10) étant composé d'un matériau transparent (18) au moins dans la zone de la fenêtre de contrôle (17).
